# EUROPÄISCHE PATENTSCHRIFT

(11) **EP 1 375 011 B1**
(45) Veröffentlichungstag und Bekanntmachung des Hinweises auf die Patenterteilung: **09.02.2005**
(21) Anmeldenummer: 03014248.3
(22) Anmeldetag: 25.06.2003
(51) Int. Cl.: B05B 11/00

(54) **Dosiervorrichtung für wenigstens ein Medium**
Dosing apparatus for at least one fluid
Appareil de dosage pour au moins un fluide

(30) Priorität: 25.06.2002 DE 10229618
(43) Veröffentlichungstag der Anmeldung: 02.01.2004
(73) Patentinhaber: Ing. Erich Pfeiffer GmbH, 78315 Radolfzell (DE)
(72) Erfinder: Fuchs, Karl-Heinz, 78315 Radolfzell (DE)
(74) Vertreter: Patentanwälte Ruff, Wilhelm, Beier, Dauster & Partner

(56) Entgegenhaltungen:
- EP-A- 0 370 257
- EP-A- 0 791 397
- DE-A- 10 017 340
- DE-A- 19 622 124

## Beschreibung

Die Erfindung betrifft eine Dosiervorrichtung für wenigstens ein Medium mit einem Gehäuseteil, der mit einem Mediumspeicher verbindbar ist, mit einer in dem Gehäuseteil angeordneten Pumpeinrichtung, sowie mit einem mit der Pumpeinrichtung verbundenen Applikator, wobei die Pumpeinrichtung wenigstens ein Einlassventil sowie wenigstens ein dem Applikator zugeordnetes Auslassventil und einen hubbeweglichen Pumpkörper aufweist, wobei der Gehäuseteil, der Applikator und alle Teile der Pumpeinrichtung koaxial zu einer Pumpachse mit Steckverbindungsabschnitten versehen sind, mittels derer der Gehäuseteil, der Applikator und die Teile der Pumpeinrichtung zu der Dosiervorrichtung funktionsfertig längst der Pumpachse zusammensteckbar sind.

Eine solche Dosiervorrichtung ist aus der DE 19622124 A1 bekannt. Die Dosiervorrichtung weist einen Gehäuseteil, einen Applikator und eine Pumpeinrichtung auf, die mit Steckverbindungsabschnitten versehen sind. Mittels der Steckverbindungsabschnitte ist die Dosiervorrichtung funktionsfertig längs ihrer Pumpachse zusammensteckbar.

Eine andere Dosiervorrichtung ist für pharmazeutische oder kosmetische Medien wie Flüssigkeiten, Gele oder ähnliches allgemein bekannt. Die bekannte Dosiervorrichtung ist mittels eines Gehäuseteiles, der eine Verschlusskappe aufweist, mit einem Mediumspeicher fest verbunden. Die Dosiervorrichtung weist eine Pumpeinrichtung in Form einer manuell betätigbaren Schubkolbenpumpe auf. Der Schubkolbenpumpe ist ein als Nasenolive ausgebildeter Applikator zugeordnet, der mit einer Fingerauflage zur manuellen Betätigung der Pumpeinrichtung versehen ist.

Aufgabe der Erfindung ist es, eine Dosiervorrichtung der eingangs genannten Art zu schaffen, die einfach und kostengünstig herstellbar ist und eine zuverlässige Funktion aufweist.

Diese Aufgabe wird dadurch gelöst, dass der Pumpkörper und eine den Pumpkörper nach einer Pumpbewegung elastisch rückstellende Balgfeder als gemeinsames, einstückiges Pumpbauteil gestaltet sind. Durch die erfindungsgemäße Lösung ist es möglich, in äußerst einfacher und kostengünstiger Weise eine funktionsfertige Dosiervorrichtung zu erhalten. Die erfindungsgemäße Lösung eignet sich insbesondere für die Herstellung von Dosiervorrichtungen in großen Stückzahlen. Bevorzugte Einsatzgebiete sind für kosmetische oder pharmazeutische Einsatzzwecke bestimmt. Die Steckverbindungsabschnitte ermöglichen einerseits ein axiales Zusammenstecken der Dosiervorrichtungsteile. Andererseits sind diese so ausgeführt, dass sich für den zusammengesetzten Funktionszustand der Teile relativ zueinander entsprechende Positionssicherungen ergeben. Die Steckverbindungsabschnitte ermöglichen es, die Dosiervorrichtung maschinell mittels einer Montagevorrichtung zusammenzustecken. Durch die Gestaltung des Pumpkörpers und der Balgfeder als gemeinsames, einstückiges Pumpbauteil wird die Anzahl von innerhalb der Dosiervorrichtung vorhandenen Bauteilen reduziert. Vorzugsweise ist das Pumpbauteil aus Kunststoff hergestellt. Der Pumpkörper selbst ist formstabil, wo hingegen die Balgfeder elastisch nachgiebig gestaltet ist.

Der Applikator ist je nach Einsatzzweck an unterschiedliche Arten von Applikationsformen angepasst. Besonders bevorzugt ist der Applikator als Nasenolive ausgebildet.

In Ausgestaltung der Erfindung bilden der Pumpkörper und die Balgfeder einen gemeinsamen Pumpraum für das Medium. Der Pumpkörper und die Balgfeder sind somit vorzugsweise als durchgängiger Hohlkörper ausgeführt. Der Pumpraum dient zur Förderung des Mediums aus dem Mediumspeicher zu dem Applikator und damit zu einer entsprechenden Austritts- oder Applikationsöffnung.

In weiterer Ausgestaltung der Erfindung ist als Teil der Pumpeinrichtung ein koaxial in dem Pumpraum angeordneter Stößel vorgesehen, der das Einlassventil für den Pumpraum bildet. Der Stößel weist vorzugsweise an seinem dem Medienspeicher zugewandten Stirnbereich einen Ventilteller auf, der auf einem gehäuseseitigen, korrespondierenden Ventilsitz abgestimmt ist. Der Stößel ist relativ zu dem Pumpraum und damit relativ zu dem Pumpkörper und der Balgfeder längsbeweglich angeordnet, wobei ein Öffnen und Schließen des Stößels und damit des Einlassventils abhängig von den Druckverhältnissen zwischen dem Pumpraum der Pumpeinrichtung einerseits und dem Mediumspeicher andererseits abhängig ist.

In weiterer Ausgestaltung der Erfindung ist insbesondere ausgangsseitig des Pumpraumes ein Auslassventil vorgesehen. In weiterer Ausgestaltung ist das Auslassventil einstückig an einer insbesondere ausgangsseitigen Balgfeder angeformt. Das Auslassventil ermöglicht innerhalb der Pumpeinrichtung einen Druckausgleich, um unabhängig von der Betätigungskraft eines Bedieners der Dosiervorrichtung eine gleichmäßige Applikation bei definiertem Druck zu erreichen. Diese Ausgestaltung reduziert die Anzahl benötigter Bauteile. Zudem ist eine besonders genaue Dosierung erzielbar.

In weiterer Ausgestaltung der Erfindung weist das Auslassventil einen radial zu der Pumpachse wirkenden Dichtabschnitt auf. Dadurch wird eine besonders gute Dichtfunktion erzielt, wodurch eine exakte Dosierung erreichbar ist.

In weiterer Ausgestaltung der Erfindung ist zusätzlich ein axial wirkender Dichtbereich an dem Auslassventil vorgesehen.

Die Kombination aus radial wirkendem Dichtabschnitt und axial wirkendem Dichtbereich gewährleistet eine besonders gute Dichtwirkung. Als radial wirkender Dichtabschnitt ist vorzugsweise ein zylindrischer Abschnitt des Auslassventils vorgesehen, der mit einem korrespondierenden hohlzylindrischen Abschnitt des Pumpraumes axial kraftschlüssig zusammenwirkt. Als axial wirkender Dichtbereich ist vorzugsweise eine konische Dichtfläche vorgesehen, die sowohl axiale als auch radiale Dichtwirkung übernimmt. Der radial wirkende Dichtabschnitt hingegen ist ausschließlich radial wirkend ausgeführt. Der zusätzlich axial wirkende Dichtbereich ist axial beabstandet zu dem radial wirkenden Dichtabschnitt am Auslassventil vorgesehen.

In weiterer Ausgestaltung der Erfindung ist ein axialer Abstand des Stößels zu dem Auslassventil - jeweils in ihrer Schließposition - geringer als ein maximaler Betätigungshub der Pumpeinrichtung. Zudem ist ein Abstand des Auslassventils zu einem Füllstück des Applikators geringer als eine Differenz zwischen dem maximalen Betätigungshub der Pumpeinrichtung und dem axialen Abstand des Stößels zu dem Auslassventil - jeweils auf die Schließposition bezogen. Der Stößel öffnet bei einem Betätigungshub das Auslassventil mechanisch, da das Auslassventil mit erhöhten Dichtkräften in seiner Schließstellung sitzt. Der Druck für die Ausbringung des Mediums ist vorzugsweise unabhängig von der Betätigungskraft des Bedieners, mit der der Betätigungshub für die Pumpeinrichtung erzielt wurde. Die Summe der axialen Abstände eines oberen Füllstückes zum Auslassventil einerseits und des Stößels zum Auslassventil andererseits - jeweils in der Schließposition der Teile gesehen - definiert den maximalen Dosier- oder Betätigungshub für die Pumpeinrichtung. Denn nach Erreichung dieses Dosierhubes laufen diese Teile der Pumpeinrichtung auf Block gegeneinander. Es ist somit eine definierte Befüllung der Pumpeinrichtung erreichbar.

In weiterer Ausgestaltung der Erfindung sind der Applikator und der Pumpkörper verdrehgesichert ineinander gesteckt. Dadurch wird eine besonders gute Positionssicherung zwischen Applikator und Pumpkörper erreicht. Zudem wird bei einer Balgfeder, die zusätzlich zu Hubkräften auch Torsionskräfte überträgt, sichergestellt, dass die Balgfeder bei einer Hubbetätigung auch entsprechende Torsionskräfte aufnehmen kann.

In weiterer Ausgestaltung der Erfindung sind alle Teile der Pumpeinrichtung, der Applikator und der Gehäuseteil aus Kunststoff hergestellt. Dies ermöglicht eine besonders einfache und kostengünstige Herstellung der Dosiervorrichtung, die eine bevorzugte Eignung für Einsatzzwecke ermöglicht, bei der hohe Stückzahlen benötigt werden.

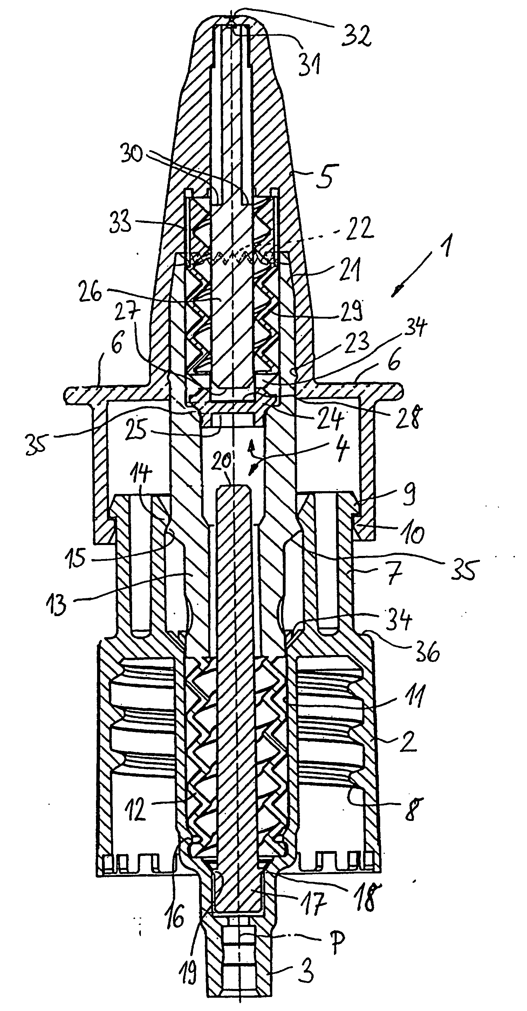

Weitere Vorteile und Merkmale der Erfindung ergeben sich aus den Ansprüchen. Nachfolgend ist ein bevorzugtes Ausführungsbeispiel der Erfindung beschrieben und anhand der einzigen Zeichnung dargestellt.

Die einzige Zeichnung zeigt in stark vergrößerter Darstellung einen Schnitt durch eine Ausführungsform einer erfindungsgemäßen Dosiervorrichtung.

Eine Dosiervorrichtung 1 - wie sie in der einzigen Zeichnung dargestellt ist - ist für die Ausbringung von wenigstens einem Medium zu kosmetischen oder pharmazeutischen Zwecken vorgesehen. Die Dosiervorrichtung 1 ist gemäß dem dargestellten Ausführungsbeispiel vollständig aus Kunststoffteilen aufgebaut. Alle Teile der Dosiervorrichtung 1 sind als Kunststoffspritzgussteile hergestellt und koaxial zueinander sowie zu einer Pumpachse P zusammengesteckt. Die Dosiervorrichtung 1 weist ein formstabiles Gehäuseteil 2 auf, das zur Verbindung der Dosiervorrichtung 1 mit einem Mediumspeicher, vorzugsweise mit einem flaschenartigen Behältnis, vorgesehen ist. Hierzu weist der Gehäuseteil 2 einen kappenförmigen Verschlussabschnitt auf, der mit einem innenliegenden Schraubgewinde 8 versehen ist. Entsprechend korrespondierend weist das den Mediumspeicher bildende Behältnis einen offenen Halsbereich auf, der mit einem Außengewinde versehen ist.

Koaxial zu der Pumpachse P, die auch eine Mittellängsachse der Dosiervorrichtung 1 bildet, ist der Gehäuseteil 2 mit einem in Richtung des nicht dargestellten Mediumspeichers abragenden Einlassstutzen 3 versehen. Der Einlassstutzen 3 setzt sich in Strömungsrichtung des Mediums - in der Zeichnung nach oben - fort in einen im wesentlichen zylindrischen Aufnahmehülsenabschnitt 11, der nach oben offen ist.

In nachfolgend näher beschriebener Weise ist in dem Gehäuseteil 2 eine Pumpeinrichtung 4 gehalten, deren Teile koaxial zu der Pumpachse P ausgerichtet sind. Die Pumpeinrichtung 4 ist - auf die Strömungsrichtung des Mediums bezogen - ausgangsseitig mit einem Applikator 5 versehen, der beim dargestellten Ausführungsbeispiel als Nasenolive gestaltet ist. Der Applikator 5 ist formstabil aus Kunststoff hergestellt und weist stufenartig radial nach außen ragende Fingerauflageabschnitte 6 auf, die einstückig an dem Applikator 5 angeformt sind.

Der Gehäuseteil 2 weist mehrere, gleichmäßige über den Umfang des Gehäuseteiles 2 verteilte Führungsstege 7 auf, die in gewissen Grenzen elastisch radial nach innen nachgiebig gestaltet sind. Die Führungsstege 7 sind im Bereich ihrer oberen Stirnenden mit Raststegen 9 versehen, die als Steckverbindungsabschnitte im Sinne der Erfindung gelten.

Der Applikator 5 ist unterhalb der Fingerauflageabschnitte 6 mit einem koaxial zur Pumpachse P ausgerichteten, zum Gehäuseteil 2 hin abragenden Ringflansch versehen, der im Bereich seines unteren Randes mit zu den Raststegen 9 korrespondierenden und nach innen abragenden Raststegen 10 versehen ist. Auch diese bilden Steckverbindungsabschnitte im Sinne der Erfindung. Die Raststege 9, 10 stellen zudem eine Axialsicherung dar, um den Applikator 5 an dem Gehäuseteil 2 zu halten. Durch die Führungsstege 7 ist der Applikator 5 relativ zu dem Gehäuseteil 2 hubbeweglich gelagert.

Innerhalb des Gehäuseteiles 2 und innerhalb des Applikators 5 ist die zuvor bereits angesprochene Pumpeinrichtung 4 angeordnet. Diese weist einen formstabilen Pumpkörper 13 auf, der sich zu dem Einlassstutzen 3 hin in eine elastisch nachgiebige Balgfeder 12 fortsetzt. Die Balgfeder 12 weist an ihrem zur Einlassseite gewandten Stirnende einen Ringwulst auf, der unterhalb einer Einschnürung 16 des Aufnahmehülsenabschnittes 11 axial gesichert eingerastet ist. Der Ringwulst einerseits und die Einschnürung 16 andererseits bilden ebenfalls Steckverbindungsabschnitte im Sinne der Erfindung.

Radial innerhalb der Führungsstege 7 ist der Gehäuseteil 2 mit einem koaxial nach oben abragenden Innenringbereich versehen, der im Bereich seines oberen Stirnrandes mit einer umlaufenden oder mehreren über den Umfang verteilt angeordneten Axialsicherungsnasen 14 versehen ist. Der formstabile Pumpkörper 13 weist eine korrespondierend radial nach außen abragende Ringschulter 15 auf, die gemeinsam mit den Axialsicherungsnasen 14 einen oberen Axialanschlag für eine Pumpbeweglichkeit des Pumpkörpers 13 bildet. Der Innenring bildet mit seinen innenliegenden Wandungsflächen gleichzeitig eine Axialführung für die Pumpbeweglichkeit des Pumpkörpers 13. Auch der Innenring, die Axialsicherungsnasen 14 und die Ringschulter 15 dienen als Steckverbindungsabschnitte im Sinne der Erfindung.

Der als Hohlkörper gestaltete Pumpkörper 13, der zu dem Applikator 5 nach oben hin offen ist, weist einen oberen Stirnrandbereich 21 auf, der sich zu seinem Stirnende hin konisch verjüngt. Korrespondierend hierzu weist der Applikator 5 eine sich ebenfalls verjüngende Innenwandung auf, so dass der Pumpkörper 13 und der Applikator 5 eine bündig abschließende Steckverbindung eingehen. Um die Steckverbindung zwischen dem Pumpkörper 13 und dem Applikator 5 in der montierten Position axial zu sichern, ist der Pumpkörper 13 unterhalb des Stirnrandbereiches 21 mit einem Ringwulst versehen, dem im Bereich der Innenwandung des Applikators 5 eine korrespondierende Ringnut zugeordnet ist. Der Ringwulst und die Ringnut bilden eine axial wirkende Stecksicherung zwischen Pumpkörper 13 und Applikator 5. Der Stirnrandbereich 21, der Innenwandungsbereich des Applikators 5, der Ringwulst und die Ringnut, die die Stecksicherung 23 bilden, sind ebenfalls Steckverbindungsabschnitte im Sinne der Erfindung.

Der Applikator 5 ist bis zu seinem oberen Stirnende hin offen. Im Bereich des oberen Stirnendes ist eine Applikationsöffnung, vorliegend eine Sprühdüse 32, vorgesehen. In dem oberen Hohlraumbereich des Applikators 5 ist ein Füllstück 26 fest angeordnet, das sich koaxial bis in den Bereich des Pumpkörpers 13 hinein erstreckt. Das Füllstück 26 ist vorliegend in den Applikator 5 eingepresst. Das Füllstück 26 ist im Bereich des Pumpkörpers 13 ummantelt von einer weiteren Balgfeder 29, die in den offenen Stirnrandbereich 21 des Pumpkörpers 13 einerseits und in den Hohlraumbereich des Applikators 5 andererseits eingesetzt ist. Der Hohlraum des Applikators 5 weist in dem Bereich, in dem die Balgfeder 29 in den Applikator 5 eingesteckt ist, axial verlaufende Profilierungen 33 auf, die einen unelastischen Kopfbereich der Balgfeder 29 fixieren und verhindern, dass die Balgfeder 29 sich aufgrund von Torsionskräften verdrehen kann. Auch die Balgfeder 29 ist sowohl in den Applikator 5 als auch in den Pumpkörper 13 lediglich eingesteckt, ohne dass zusätzliche Fixierungsmittel vorgesehen sind.

Das Stirnende des Stirnrandbereiches 21 des Pumpkörpers 13 ist mit einer Umfangsverzahnung 22 versehen. Ein Radialschulterbereich im Inneren des Applikators 5 weist eine korrespondierende Umfangsverzahnung auf, so dass der Pumpkörper 13 verdrehgesichert in dem Applikator 5 gehalten ist. Auch die Profilierungen 33 und die Umfangsverzahnung 22 bilden Steckverbindungsabschnitte im Sinne der Erfindung.

An einem von dem unelastischen Halte- oder Kopfbereich der oberen Balgfeder 29 beabstandeten unteren Stirnendbereich ist an der Balgfeder 29 ein nachfolgend näher beschriebenes Auslassventil 24 einstückig angeformt, das als Ventilteller gestaltet ist. Das Auslassventil 24 wirkt mit einem schulterartigen Ventilsitz 35 des Pumpkörpers 13 in nachfolgend näher beschriebener Weise zusammen. Das Auslassventil 24 weist einen in den Pumpraum hineinragenden radialen und ringförmigen Dichtabschnitt auf, der zylindrisch gestaltet ist und dichtend in den hohlzylindrischen oberen Bereich des Pumpraumes eintaucht. Zusätzlich ist oberhalb des radialen Dichtabschnitts ein sich konisch erweiternder Dichtbereich vorgesehen, der mit dem ebenfalls konisch ausgeführten Ventilsitz 35 zusammenwirkt. Dadurch wird ergänzend eine axial wirkende Dichtung erzielt.

Sowohl die obere Balgfeder 29 als auch die untere Balgfeder 12 sind jeweils als Druckfederspeicher ausgebildet.

Die untere Balgfeder 12 sowie der Pumpkörper 13 bilden einen durchgängigen Pumpraum. Koaxial innerhalb des Pumpraumes ist in dem Pumpkörper 13 ein axial beweglicher Stößel 17 angeordnet, der in seinen unteren Endbereich gemeinsam mit einem Ventilsitzabschnitt des Gehäuseteiles 2 ein Einlassventil bildet. Hierzu ist in dem unteren Stirnbereich des Stößels 17 ein radial nach außen abragender Tellerringabschnitt 19 vorgesehen, dem am Gehäuseteil 2 ein korrespondierend gestalteter, ringförmiger Ventilsitz 18 zugeordnet ist.

Zwischen dem einstückig an der Balgfeder 29 angeformten Auslassventil 24 und dem elastischen Bereich der Balgfeder 29 sind mehrere Radialöffnungen 34 in der Balgfeder 29 vorgesehen, durch die das Medium in das Innere der Balgfeder 29 hineinströmen kann. Der Hauptströmungsweg für das Medium verläuft außerhalb der Balgfeder 29 zwischen der Balgfeder und der Innenwandung des Applikators 5 zum Füllstück 26 hin. Am Füllstück 26 sind Strömungskanalabschnitte 30 vorgesehen, die das Medium zu der Auslassöffnung 31 und in die Sprühdüse 32 leiten. Der Hohlraum innerhalb des Applikators und das innerhalb der Balgfeder 29 angeordnete Füllstück 26 sowie die Außenkontur der Balgfeder 29 bilden bis zur Applikationsöffnung, d.h. bis zur Sprühdüse 32 hin, Strömungswegabschnitte zur Führung des Mediums in Richtung zur Sprühdüse 32. Ein Stirnende des Füllstücks 26 bildet gemeinsam mit der Sprühdüse 32 eine Auslassöffnung 31.

In der in der Zeichnung dargestellten Position der Dosiervorrichtung 1 sind alle Ventile, d.h. das Einlassventil 18, 19 und das Auslassventil 24 in ihrer Schließposition dargestellt. Das Auslassventil 24 wird in dieser Schließposition durch die Druckkraft der oberen Balgfeder 29 gehalten. Der Applikator 5 befindet sich relativ zu dem Gehäuseteil 2 in seiner oberen Endstellung. In dieser oberen Hubstellung wird der Applikator 5 durch die Druckkraft der unteren Balgfeder 12 gehalten, die den Pumpkörper 13 in seiner oberen Hubstellung relativ zu dem Innenring des Gehäuseteiles 2 hält.

Sobald nun durch eine Bedienperson der Applikator 5 durch entsprechend manuellen Druck auf die Fingerauflageabschnitte 6 relativ zu dem Gehäuseteil 2 nach unten gedrückt wird, wird die durch den Hohlraum innerhalb der Balgfeder 12 und innerhalb des Pumpkörpers 13 gefangene Luft komprimiert. Durch die Druckerhöhung im Inneren der Pumpkammer, d.h. dem Inneren der Balgfeder 12 und des Pumpkörpers 13, wird der Stößel 17 in seiner das Einlassventil schließenden Position gehalten.

In der Ausgangsposition der Dosiervorrichtung 1, wie sie in der Zeichnung dargestellt ist, ist der Abstand des oberen Stirnendes 20 des Stößels 17 relativ zu einer benachbarten unteren, einlassseitigen Stirnfläche 25 wesentlich geringer als der maximale Hub des Applikators 5 relativ zu dem Gehäuseteil 2. Dieser maximale Hub ist durch die korrespondierenden Raststege 9, 10 an dem Gehäuseteil 2 einerseits und den Applikator 5 andererseits nach oben begrenzt. Nach unten ist an dem Gehäuseteil 2 eine umlaufende Anschlagschulter 36 vorgesehen, an der ein unterer Stirnrandbereich des Ringflansches des Applikators 5 anschlägt.

Bei einer Komprimierung der Pumpkammer durch ein Nachuntendrücken der Fingerauflageabschnitte 6 trifft somit das Stirnende 20 des Stößels 17 auf die einlassseitige Stirnfläche 25 des Auslassventils 24, wodurch das Auslassventil 24 mechanisch aus seiner Schließposition angehoben wird. In dieser Schließposition ist ein radialer Dichtsitz im Bereich des zylindrischen Dichtabschnittes des Auslassventils 24 vorgesehen, so dass in axialer Richtung ein Kraftschluss zwischen der Innenwandung des Pumpraumes und dem Dichtabschnitt des Auslassventils 24 überwunden werden muss. In der in der Zeichnung dargestellten Schließposition ist im übrigen eine obere, auslassseitige Stirnfläche 28 des Auslassventils 24 zu einer unteren Stirnseite 27 des Füllstückes 26 ebenfalls beabstandet, so dass das axial fixierte Füllstück 26 das Abheben des Auslassventils 24 zunächst nicht behindert. Die komprimierte Luft kann nun durch das geöffnete Auslassventil 24 seitlich an diesem vorbeistreichen und gelangt gegebenenfalls durch die Radialöffnungen 34 in das Innere der Balgfeder 29. Vor allem aber wird sie aufgrund ihrer geringen Dichte außen an der Balgfeder 29 entlang streichen und über die Axialprofilierungen 33 zu den entsprechenden Strömungsnutabschnitten 30 des Füllstückes 26 geleitet. Die Strömungsnutabschnitte 30 des Füllstückes 26 sind zu einem oberen Stirnende des Füllstückes 26 hin durchgängig gestaltet. Nach der Wegnahme der Druckbelastung auf die Fingerauflageabschnitte 6 drückt die untere Balgfeder 12 den Applikator 5 und den Pumpkörper 13 wieder in die Ausgangslage gemäß der Zeichnung zurück. Hierdurch entsteht zwangsläufig innerhalb der Pumpkammer ein Unterdruck, der aufgrund des dann höheren Druckes des Mediums im Mediumspeicher den Stößel 17 nach oben drückt und das Einströmen des Mediums, vorzugsweise eine Flüssigkeit oder ein Gel, in die Pumpkammer bewirkt. Durch mehrere Betätigungsvorgänge wird die gesamte Luft der Pumpkammer verdrängt, so dass mit der eigentlichen Dosierung des Mediums begonnen werden kann. Die zu Beginn stattfindenden Pumpvorgänge, die zur Verdrängung der Luft aus der Dosiervorrichtung 1 dienen, werden auch als Priming bezeichnet.

Die Summe der Abstände des Stirnendes 20 des Stößels 17 zu der einlassseitigen Stirnfläche 25 des Auslassventils 24 und der Stirnseite 27 des Füllstückes 26 zu der auslassseitigen Stirnfläche 28 des Auslassventils 24 ist geringer als der maximale Hub der Pumpeinrichtung 4. Der maximale Hub der Pumpeinrichtung 4 wird durch den maximalen Hub des Applikators 5 relativ zu dem Gehäuseteil 2 definiert, wie oben bereits ausgeführt worden war. Bei einem Nachuntendrücken der Fingerauflageabschnitte 6 durch manuelle Betätigung einer Bedienperson laufen somit kurz vor Hubende der Stößel 17, das Auslassventil 24 und das Füllstück 26 auf Block auf, so dass in dieser Position zwangsläufig sowohl das Einlassventil 18, 19 geschlossen als auch das Auslassventil 24 geöffnet sind.

Durch das Auslassventil 24 wird der Pumpraum der Pumpeinrichtung 4 auslassseitig, d.h. strömungsabwärts begrenzt. Die einlassseitige Begrenzung erfolgt durch das Einlassventil 18, 19.

## Patentansprüche

1. Dosiervorrichtung für wenigstens ein Medium mit einem Gehäuseteil (2), der mit einem Mediumspeicher verbindbar ist, mit einer in dem Gehäuseteil (2) angeordneten Pumpeinrichtung (4), sowie mit einem mit der Pumpeinrichtung (4) verbundenen Applikator (5), wobei die Pumpeinrichtung (4) wenigstens ein Einlassventil (18, 19) sowie wenigstens ein dem Applikator zugeordnetes Auslassventil (24) und einen hubbeweglichen Pumpkörper (13) aufweist, wobei dass der Gehäuseteil (2), der Applikator (5) und alle Teile der Pumpeinrichtung (4) koaxial zu einer Pumpachse (P) mit Steckverbindungsabschnitten (9, 10, 14 bis 16, 21, 22, 33) versehen sind, mittels derer der Gehäuseteil (2), der Applikator (5) und die Teile der Pumpeinrichtung (4) zu der Dosiervorrichtung (1) funktionsfertig längs der Pumpachse (P) zusammensteckbar sind, **dadurch gekennzeichnet, dass** der Pumpkörper (13) und eine den Pumpkörper (13) nach einer Pumpbewegung elastisch rückstellende Balgfeder (12) als gemeinsames, einstückiges Pumpbauteil gestaltet sind.

2. Dosiervorrichtung nach Anspruch 1, **dadurch gekennzeichnet, dass** der Pumpkörper (13) und die Balgfeder (12) einen gemeinsamen Pumpraum für das Medium bilden.

3. Dosiervorrichtung nach Anspruch 1, **dadurch gekennzeichnet, dass** als Teil der Pumpeinrichtung (4) ein koaxial in dem Pumpraum angeordneter Stößel (17) vorgesehen ist, der das Einlassventil für den Pumpraum bildet.

4. Dosiervorrichtung nach Anspruch 1 oder 3, **dadurch gekennzeichnet, dass** insbesondere ausgangsseitig des Pumpraumes ein Auslassventil (24) vorgesehen ist.

5. Dosiervorrichtung nach Anspruch 4, **dadurch gekennzeichnet, dass** das Auslassventil (24) einstückig an einer insbesondere ausgangsseitigen Balgfeder (29) angeformt ist.

6. Dosiervorrichtung nach Anspruch 4, **dadurch gekennzeichnet, dass** das Auslassventil (24) einen radial zu der Pumpachse (P) wirkenden Dichtabschnitt aufweist.

7. Dosiervorrichtung nach Anspruch 6, **dadurch gekennzeichnet, dass** zusätzlich ein axial wirkender Dichtbereich an dem Auslassventil (24) vorgesehen ist.

8. Dosiervorrichtung nach wenigstens einem der vorhergehenden Ansprüche, **dadurch gekennzeichnet, dass** ein axialer Abstand des Stößels (17) zu dem Auslassventil (24) - jeweils in ihrer Schließposition - geringer ist als ein maximaler Betätigungshub der Pumpeinrichtung (4).

9. Dosiervorrichtung nach wenigstens einem der vorhergehenden Ansprüche, **dadurch gekennzeichnet, dass** der Applikator (5) und der Pumpkörper (13) verdrehgesichert ineinandergesteckt sind.

10. Dosiervorrichtung nach wenigstens einem der vorhergehenden Ansprüche, **dadurch gekennzeichnet, dass** alle Teile der Pumpeinrichtung (4), der Applikator (5) und der Gehäuseteil (2) aus Kunststoff hergestellt sind.

## Claims

1. Dosing device for at least one medium with a casing part (2) connectable to a medium reservoir, with a pumping device (4) located in the casing part (2) and with an applicator (5) connected to the pumping device (4), said pumping device (4) having at least one inlet valve (18, 19), as well as at least one outlet valve (24) associated with the applicator (5) and a stroke-movable pumping body (13), wherein the casing part (2), applicator (5) and all parts of the pumping device (4) are provided coaxially to a pumping axis (P) with plug connection sections (9, 10, 14 to 16, 21, 22, 33) by means of which the casing part (2), applicator (5) and the parts of the pumping device (4) can be functionally assembled along the pumping axis (P) to form the dosing device (1), **characterized in that** the pumping body (13) and a bellows spring (12) elastically returning the pumping body (13) following a pumping movement are constructed as a common, integral pumping component.

2. Dosing device according to claim 1, **characterized in that** the pumping body (13) and bellows spring (12) form a common pumping area for the medium.

3. Dosing device according to claim 1, **characterized in that** a plunger (17) arranged coaxially in the pumping area and which forms the inlet valve for the pumping area is provided as part of the pumping device (4).

4. Dosing device according to claim 1 or 3, **characterized in that** in particular at the outlet side of the pumping area is provided an outlet valve (24).

5. Dosing device according to claim 4, **characterized in that** the outlet valve (24) is integrally shaped onto an in particular outlet-side bellows spring (29).

6. Dosing device according to claim 4, **characterized in that** the outlet valve (24) has a sealing section acting radially to the pumping axis (P).

7. Dosing device according to claim 6, **characterized in that** additionally an axially acting sealing area is provided at the outlet valve (24).

8. Dosing device according to at least one of the preceding claims, **characterized in that** an axial spacing of the plunger (17) with respect to the outlet valve (24), in each case in their closed position, is smaller than a maximum operating stroke of the pumping device (4).

9. Dosing device according to at least one of the preceding claims, **characterized in that** the applicator (5) and pumping body (13) are engaged in one another so as to prevent twisting.

10. Dosing device according to at least one of the preceding claims, **characterized in that** all parts of the pumping device (4), applicator (5) and casing part (2) are made from plastic.

## Revendications

1. Dispositif de dosage pour au moins une substance avec un élément de boîtier (2) qui peut être raccordé à un réservoir à substances, avec un moyen de pompage (4) disposé dans l'élément de boîtier (2), ainsi qu'avec un applicateur (5) raccordé au moyen de pompage (4), le moyen de pompage (4) présentant au moins une soupape d'admission (18, 19) ainsi qu'au moins une soupape d'échappement (24) associée à l'applicateur, et un corps de pompage (13) mobile pour un mouvement de course, l'élément de boîtier (2), l'applicateur (5) et toutes les pièces du moyen de pompage (4) étant munis de sections de raccordement par enfichage (9, 10, de 14 à 16, 21, 22, 33) en direction coaxiale par rapport à un axe de pompage (P), au moyen desquelles l'élément de boîtier (2), l'applicateur (5) et les pièces du moyen de pompage (4) peuvent être assemblés par enfichage le long de l'axe de pompage (P) pour obtenir un dispositif de dosage (1) prêt à emploi, **caractérisé en ce que** le corps de pompage (13) et un ressort à soufflet (12), qui produit le rappel élastique du corps de pompage (13) après le mouvement de pompage, sont réalisés en tant qu'élément de construction de pompage monobloc combiné.

2. Dispositif de dosage d'après la revendication 1, **caractérisé en ce que** le corps de pompage (13) et le ressort à soufflet (12) forment en commun un espace de pompage pour la substance.

3. Dispositif de dosage d'après la revendication 1, **caractérisé en ce qu'**un poussoir (17) disposé coaxialement dans l'espace de pompage est prévu en tant qu'élément du moyen de pompage (4) et qu'il constitue la soupape d'admission pour l'espace de pompage.

4. Dispositif de dosage d'après la revendication 1 ou 3, **caractérisé en ce qu'**une soupape d'échappement (24) est prévue notamment du côté de la sortie de l'espace de pompage.

5. Dispositif de dosage d'après la revendication 4, **caractérisé en ce que** la soupape d'échappement (24) est ajoutée par moulage d'une seule pièce à un ressort à soufflet (29) situé notamment du côté de la sortie.

6. Dispositif de dosage d'après la revendication 4, **caractérisé en ce que** la soupape d'échappement (24) présente une section d'étanchement, qui agit radialement par rapport à l'axe de pompage (P).

7. Dispositif de dosage d'après la revendication 6, **caractérisé en ce que** sur la soupape d'échappement (24) on prévoit en plus un domaine d'étanchement agissant en direction axiale.

8. Dispositif de dosage d'après au moins une des revendications précédentes, **caractérisé en ce qu'**un écart axial entre le poussoir (17) et la soupape d'échappement (24), étant respectivement dans leur état fermé, est inférieur à une course d'actionnement maximale du moyen de pompage (4).

9. Dispositif de dosage d'après au moins une des revendications précédentes, **caractérisé en ce que** l'applicateur (5) et le corps de pompage (13) sont emboîtés l'un dans l'autre en étant assurés contre torsion.

10. Dispositif de dosage d'après au moins une des revendications précédentes, **caractérisé en ce que** toutes les pièces du moyen de pompage (4), l'applicateur (5) et l'élément de boîtier (2) sont fabriqués en matière plastique.
